# EUROPEAN PATENT APPLICATION

(11) **EP 4 289 489 A1**
(43) Date of publication of application: **13.12.2023**
(21) Application number: 23150677.5
(22) Date of filing: 09.01.2023
(51) Int. Cl.: A63F 13/2145, A63F 13/537, A63F 13/58, A63F 13/69, A63F 13/822, A63F 13/92

(54) **METHOD AND APPARATUS FOR PROVIDING ITEM MERGING FUNCTION FOR GAME USER INTERFACE**

(30) Priority: 07.06.2022 KR 20220069041
(71) Applicant: Netmarble N2 Inc., Seoul 08393 (KR)
(72) Inventor: Seo, JaeKyoung, 16923 Yongin-si (KR); Chae, HanSol, 08521 Seoul (KR)
(74) Representative: Hamer, Thomas Daniel

(57) **Abstract**

A method and device for providing an item merging function to a game user interface are disclosed. The method of providing an item merging function includes when a time in which a user does not play a game through a user input is greater than or equal to a preset time, among multiple types of items, determining whether a preset number or more of items of the same type exist on a game map, when the preset number or more of items of the same type exist, automatically converting the items of the same type into a higher level item by applying the item merging function to the items of the same type, and when a vacant item disposition area exists in the game map, arranging the higher level item in the vacant item disposition area.

## Description

### CROSS-REFERENCE TO RELATED APPLICATIONS

This application claims the benefit under 35 USC § 119(a) of Korean Patent Application No. 10-2022-0069041, filed on June 7, 2022, in the Korean Intellectual Property Office, the entire disclosure of which is incorporated herein by reference for all purposes.

### BACKGROUND

### 1. Field

The following description relates to a game service-providing method, and more particularly, to a method of providing an item merging function for a game user interface.

### 2. Description of Related Art

Through a device, such as a smartphone and a tablet personal computer (PC), many people enjoy mobile games. With the expansion of the mobile game market, there are many attempts to secure differentiation from other mobile games. In addition, by adopting artificial intelligence technology, many functions have been newly introduced for a user to smoothly enjoy a mobile game by controlling a game character based on a predetermined action rule even without a user's control.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method of providing an item merging function in a game user interface (UI), the method includes, when a time in which a user does not play a game through a user input is greater than or equal to a preset time, among multiple types of items, determining whether a preset number or more of items of the same type exist on a game map, when the preset number or more of items of the same type exist, automatically converting the items of the same type into a higher level item by applying the item merging function to the items of the same type, and when a vacant item disposition area exists in the game map, arranging the higher level item in the vacant item disposition area.

The items, of the same type, to which the item merging function is applied may be determined based on a predefined priority based on a type of item.

The items, of the same type, to which the item merging function is applied may be determined based on at least one condition of a level and an allowed count for a character to perform functions.

The method further includes, when the vacant item disposition area does not exist on the game map, controlling a game character in an item carrying mode, wherein the item carrying mode corresponds to a mode in which the game character moves on the game map while carrying the higher level item.

The controlling of the game character in the item carrying mode may include determining whether an item of the same type as the converted items exists within a preset distance from a location where the items are automatically converted into the higher level item, when the item of the same type as the converted items exists within the preset distance, arranging the higher level item in a nearest vacant item disposition area among nearest item disposition areas where the items of the same type are arranged, and terminating the item carrying mode.

The controlling of the game character in the item carrying mode may include determining whether an item of the same type as the converted items exists within a preset distance from a location where the items are automatically converted into the higher level item, and when the item of the same type as the converted items does not exist within the preset distance, controlling the game character in the item carrying mode until a vacant item disposition area appears on the game map.

The method further includes decreasing an allowed count for a game character to perform functions by a predetermined value, determining the allowed count for the game character to perform functions, and when the allowed count for the game character to perform functions is a predetermined value, controlling the game character in a rest mode, wherein the rest mode corresponds to a mode in which the allowed count for the game character to perform functions increases by a predetermined value.

The game map may include a grid area including a plurality of item disposition areas and each of the item disposition area corresponds to an area where at least one item can be placed.

In another general aspect, a device for providing an item merging function to a game user interface (UI), the device includes an output module configured to display a game map including a plurality of items and a character, a memory configured to store one or more instructions, and a processor configured to execute the one or more instructions, wherein the processor is configured to, when a time in which a user does not play a game through a user input is greater than or equal to a preset time, among multiple types of items, determine whether a preset number or more of items of the same type exist on a game map, when the preset number or more of items of the same type exist, automatically convert the items of the same type into a higher level item by applying the item merging function to the items of the same type, and when a vacant item disposition area exists in the game map, arrange the higher level item in the vacant item disposition area.

### BRIEF DESCRIPTION OF THE DRAWINGS

FIG. 1 is a block diagram illustrating a configuration of a computing device that provides an item organizing function in a user interface (UI) according to an embodiment.
FIGS. 2 to 5 illustrate various examples of an item organizing function in a UI provided in a game service according to an embodiment.
FIG. 6 is a flowchart illustrating a method of providing an organizing function in a UI, according to an embodiment.
FIG. 7 is a block diagram illustrating an example of a computing environment in which embodiments are implemented.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

Various embodiments are described with reference to the drawings. In the present disclosure, various descriptions are provided for understanding the present disclosure. However, it is apparent that these embodiments may be implemented without detailed descriptions. The terms of "component," "module," "system", and the like may refer to a computer-related entity, hardware, firmware, software, a combination of software and hardware, or execution of software. For example, a component may be a procedure executed in a processor, a processor, an object, a running thread, a program, and/or a computer, but is not limited thereto. For example, the component may be both an application executed by a computing device and a computing device. One or more components may reside in a processor and/or a running thread. One component may be localized in one computer. One component may be distributed between two or more computers. In addition, these components may be executed by various computer-readable media with various data structures therein. Components, for example, may communicate via local and/or remote processes based on a signal (e.g., data from a component that interacts with another component in a local system and a distribution system and/or data transmitted via a network, such as the Internet, through a signal). In addition, the term "or" is intended to mean an inclusive "or" rather than an exclusive "or". That is, unless otherwise specified or clear from the context, "X uses A or B" is intended to mean any one of comprehensive replacements. That is, in case where X uses A, X uses B, or X uses both A and B, "X uses A or B" may be applicable to all aforementioned cases. As used herein, the term "and/or" includes any one and any combination of any two or more of the associated listed items. In addition, the terms "include," "comprise," and "have" specify the presence of stated features, numbers, operations, elements, components, and/or combinations thereof, but do not preclude the presence or addition of one or more other features, numbers, operations, elements, components, and/or combinations thereof. As used herein, the singular forms "a", "an", and "the" are intended to include the plural forms as well, unless the context clearly indicates otherwise. In addition, "greater than or equal to" and/or "less than" may be interpreted as "greater than" and/or "less than or equal to", and vice versa. One of ordinary skill in the art shall recognize that various examples of logical blocks, configurations, modules, circuits, means, logics, and algorithm operations described herein may be implemented in electronic hardware, computer software, and any combinations thereof. To clearly illustrate interchangeability of hardware and software, various components, blocks, configurations, means, logics, modules, circuits, and operations are generally described herein in terms of their functionality. Whether such functionality may be implemented as hardware or software depends on an application and design constraints imposed on the overall system. Those skilled in the art may implement the described functionality by various methods for applications. While this disclosure includes specific examples, it will be apparent to one of ordinary skill in the art that various changes in form and details may be made in these examples without departing from the spirit and scope of the claims and their equivalents.

In the present disclosure, the term "item" may be used as a term referring to an object that a user or a character that replaces the user may use and an object that helps the progress of a game when being used, that is, all data that may be understood as an item in the game. The item may include items with various attributes, such as a color, size, shape, function, effect, cost/value in the game, movability, and the like.

In the present disclosure, the term "item disposition area" may be used as a term that indicates each figure in a predetermined shape that fills a predetermined sized area without a gap or an overlapped portion. A shape of the figure available for the item disposition area may be various, for example, may be a polygon, such as an equilateral triangle, a square, a regular hexagon, a diamond, an oblong, and a trapezoid or may be an atypical figure in a curved shape. In the present disclosure, the "item disposition area" may configure a game map, which is a background of the game, and may be used as a unit of the size of each item that may exist on the game map and/or a unit of movement.

In the present disclosure, the term "adjacent" may be used as a term that indicates a state in which the user may recognize a distance between at least two objects is short or a state in which a distance between at least two objects is short as possible based on a preset rule. For example, when there is a first object on the center of a screen and a second object on the bottom left of the screen and the second object moves to a location slightly skewed to the left from the center of the screen, the user may recognize that the distance between the second object and the first object becomes shorter. Alternatively, in case where the preset rule sets adjacent to be a case where a "straight line distance" between the two objects is relatively short or "the number of item disposition areas" between the two objects is relatively small, the two objects may be adjacent to each other when the "straight line distance" between the two objects decreases or the "number of item disposition areas" between the two objects decreases. The example described above is merely an example and does not limit the scope of the present disclosure.

In the present disclosure, the term "effect" may be a method of visually emphasizing an object in a user interface (UI). Any possible method may be used to visually emphasize an object. For example, displaying an effect for an object may include displaying animation adjacent to the object, highlighting the object in a predetermined color, granting a motion to the object, changing the color of the object, or blinking the object. The method of visually emphasizing an object may be preset to vary depending on the attribute of the object. In addition, the effect may be provided by combining with other stimuli (auditory, olfactory, vibration, and the like) other than visual emphasis.

In the present disclosure, the term "selection input" may be used as a term that indicates a user input for selecting an object in the UI. For example, the user may input a selection input for an object (e.g., an item) by clicking the object. In addition, when the selection input is received, in response to the selection input, a new object may be displayed on the UI or may become an attribute of the object and displayed. For example, when the user inputs a selection input for an item, information on the selected item may be further displayed on the UI and/or a button object related to an available function for the selected item may change into an active state that may receive a use input for the function and may be displayed.

In the present disclosure, the term a "movement input" may be used as a term that indicates a user's input (hereinafter, referred to as user input) for moving a location of an object in the UI. For example, the user may click and drag an object (e.g., an item) and may input a movement input for the object. However, the example is not limited thereto, and the movement input may be input by various types, such as wheel scrolling of a mouse and a direction key of a keyboard. In addition, when the movement input is received, the location of the object that received the movement input in the UI may change based on the received movement input and may be displayed.

In the present disclosure, the term "merge" or "merging" may be used as a term that indicates an operation of synthesizing two or more items and/or an operation of creating a new item by merging two or more items.

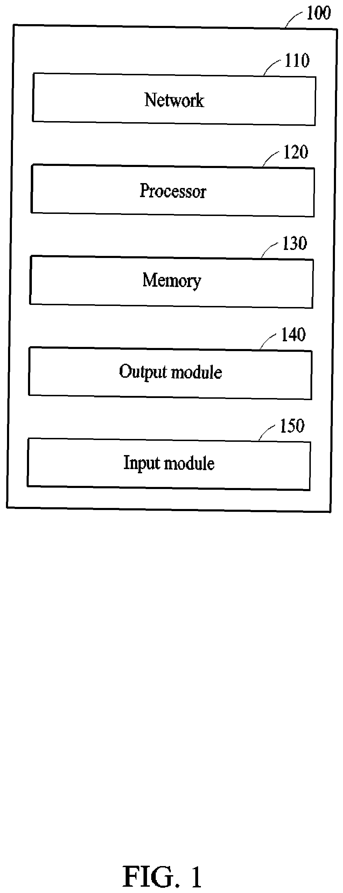

FIG. 1 is a block diagram illustrating a configuration of a computing device that provides an organizing function in a UI according to an embodiment.

Referring to FIG. 1, a computing device 100 according to an embodiment may include other components for performing a computing environment of the computing device 100 and only some of the disclosed components may configure the computing device 100. In an embodiment, the computing device 100 may be a device for providing an item merging function for a game UI.

The computing device 100 according to an embodiment may include a network 110, a processor 120, a memory 130, an output module 140, and an input module 150.

The computing device 100 according to an embodiment may include a personal computer (PC), a laptop, a mobile terminal, a smartphone, and a tablet PC and may include all types of terminals that may access a wired/wireless network.

The network 110 according to an embodiment may use any type of wired or wireless communication systems. The network 110 may be configured regardless of communication modes, such as wired or wireless, and may be configured in various communication networks, such as a personal area network (PAN) and a wide area network (WAN). In addition, the network 110 may be a publicly known world wide web (WWW) and may use a wireless transmission technique used for short-range communication, such as infrared data association (IrDA) and Bluetooth.

The techniques described herein may be used in the networks stated above as well as other networks. The processor 120 according to an embodiment may be configured in one or more cores and may include a processor for providing a UI, deep learning, and/or analyzing data, such as a central processing unit (CPU), a general-purpose graphics processing unit (GPGPU), and a tensor processing unit (TPU) of a computing device. The processor 120 may perform data processing for machine learning according to an embodiment and/or may provide a UI by reading a computer program stored in the memory 130. According to an embodiment, the processor 120 may perform an operation for training a neural network. The processor 120 may perform calculations for training a neural network, such as processing input data for training in deep learning (DL), extracting a feature from input data, calculating an error, and updating a weight of the neural network by using backpropagation.

The memory 130 according to an embodiment may store information generated or determined by the processor 120 and information received by the network 110. The memory 130 according to an embodiment may include at least one type of storage media of a flash memory type, a hard disk type, a multimedia card micro type, a card memory type (for example, a secure digital (SD) or extreme digital (XE) memory), random access memory (RAM), static RAM, read-only memory (ROM), electrically erasable programmable ROM (EEPROM), programmable ROM (PROM), magnetic memory, a magnetic disk, and an optical disk. The computing device 100 may operate in conjunction with a web storage configured to perform a storage function of the memory 130 on the Internet. The description of the memory above is only an example, and the present disclosure is not limited thereto.

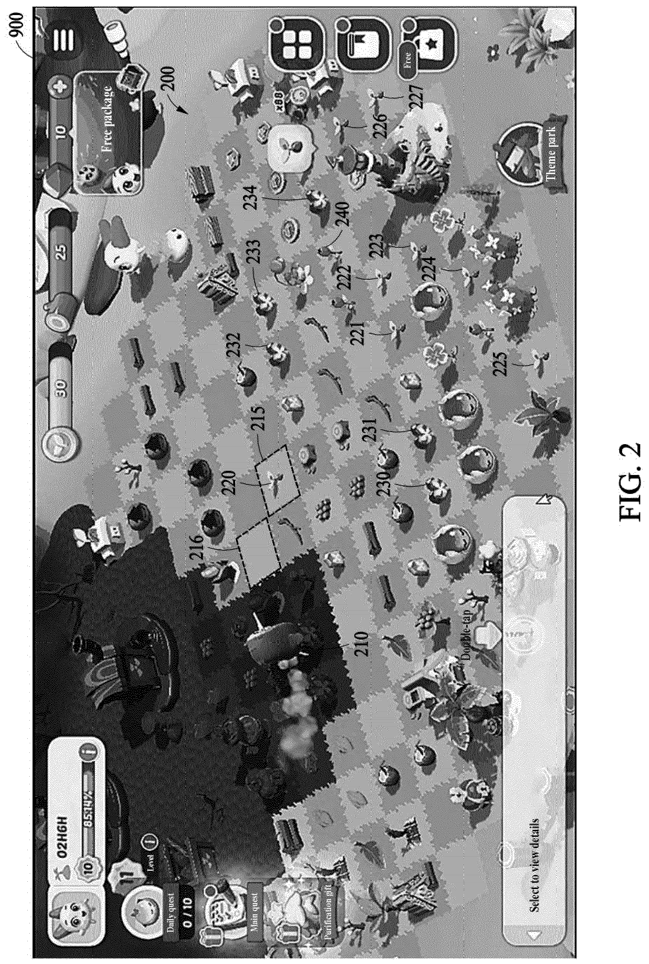

The output module 140 according to an embodiment may display a UI (or a game UI). The output module 140 may display the UI as illustrated in FIGS. 2 to 5. Hereinafter, UIs illustrated and described below are only examples and the present disclosure is not limited thereto. The output module 140 according to an embodiment may output information generated or determined by the processor 120 and information received by the network 110. The output module 140 according to an embodiment may include at least one of a liquid crystal display (LCD), a thin film transistor liquid crystal display (TFT LCD), an organic light-emitting diode (OLED) display, a flexible display, and a three-dimensional (3D) display. Some of the display modules may be configured as a transparent type or a light transmitting type to view the outside therethrough. This may be referred to as a transparent display module. A representative example of the transparent display module may be a transparent OLED (TOLED). The input module 150 according to an embodiment may receive a user input. A key and/or buttons configured to receive a user input may be provided in the input module 150 according to an embodiment. A computer program for providing the UI (according to an embodiment) may be executed based on the user input through the input module 150. The input module 150 according to an embodiment may receive a signal by sensing a user's button manipulation or a touch input, or may receive voice or motion of a user through a camera or a microphone, and convert them into an input signal. For this, a speech recognition technique or a motion recognition technique may be used.

The input module 150 according to an embodiment may be implemented as an external input device connected to the computing device 100. For example, the external input device may be at least one of a touch pad, a stylus pen, a keyboard, and a mouse configured to receive a user input. However, this is an example, and the present disclosure is not limited thereto. The input module 150 according to an embodiment may recognize a touch input by a user. The input module 150 according to an embodiment may be the same component as the output module 140. The input module 150 may be configured as a touch screen configured to receive a selection input of a user. For the touch screen, at least one of a capacitive overlay type, an infrared (IR) beam type, a surface acoustic wave (SAW) type, a piezoelectric type, and a resistive overlay type may be used. The detailed description of the touch screen above is only an example according to an embodiment, and various touch screen panels may be employed in the computing device 100. The input module 150 configured in the touch screen may include a touch sensor. The touch sensor may be configured to convert pressure applied to a predetermined part of the input module 150 or a change in capacitance occurring in a predetermined part of the input module 150 into an electrical input signal. The touch sensor may be configured to detect a position and an area being touched as well as the pressure of the touch. When there is a touch input detected by the touch sensor, a signal corresponding to the touch input may be transmitted to a touch controller. The touch controller may process the signal, and then may transmit data corresponding to the signal to the processor 120. Accordingly, the processor 120 may recognize which area of the input module 150 is touched. In an embodiment, a server may include other components configured to perform a server environment of the server. The server may include a device in any type. The server may be a digital device equipped with a processor and having a computation capability with a memory, such as a laptop computer, a notebook computer, a desktop computer, a web pad, and a mobile phone. According to an embodiment, a server (not illustrated) that performs an operation for providing a game UI to a user terminal may include a network unit, a processor, and a memory. The server may generate a UI according to an embodiment. The server may transmit the generated UI to a user terminal. Alternatively, the server may be a computing system configured to provide information for generating the UI according to an embodiment to a user terminal via a network. In this case, the user terminal may be any type of computing device 100 that may access the server. The processor of the server may transmit the UI to a user terminal through the network unit. Alternatively, the processor of the server may transmit the information for generating the UI to the user terminal via the network unit. For example, the server according to an embodiment may be a cloud server. The server may be a web server that processes a service. The types of the server described above is only an example and the present disclosure is not limited thereto. The network unit, the processor, and the memory included in the server according to an embodiment may perform the same function as the network 110, the processor 120, and the memory 130 included in the computing device 100, respectively, or may be configured the same as the network 110, the processor 120, and the memory 130 included in the computing device 100, respectively. The areas may be spaces, of a screen, displayed on the UI and may not overlap with each other. Alternatively, two or more areas may be displayed by overlapping with each other. When two or more areas are displayed by overlapping with each other, one area may not be visible as being hidden by the other area. Alternatively, when two or more areas are displayed by overlapping with each other and an upper portion of an area is semi-transparently displayed, at least some of a lower portion thereof may be visible. The two or more areas may have the same size. In addition, the two or more areas may have different sizes. One area may include a single area or may include a plurality of sub-areas. The area may include one or more display objects.

The object may be a figure, a symbol, or a set of letters corresponding to a program, an instruction, or data. According to an embodiment, the object may be used for receiving a selection input of the user. For example, when receiving a user input for the object, the processor 120 may execute instructions or stored data in response to the object and may display the result of the execution on the UI. The object may be interpreted the same as a display obj ect.

The "display" may be an operation that shows data to a user through the output module 140.

In an embodiment, the processor 120 may, when a time in which a user does not play a game through a user input is greater than or equal to a preset time, among multiple types of items, determine whether a preset number of items (or more) of the same type exist on a game map, when the preset number of items (or more) of the same type exist, automatically convert the items of the same type into a higher level item by applying the item merging function to the items of the same type, and when a vacant item disposition area exists in the game map, arrange the higher level item in the vacant item disposition area.

In an embodiment, the processor 120 may, when the vacant item disposition area does not exist on the game map, control a game character in an item carrying mode, wherein the item carrying mode may correspond to a mode in which the game character moves on the game map while carrying the higher level item.

In an embodiment, the processor 120 may determine whether an item of the same type as the converted items exists within a preset distance at a location where the items are automatically converted into the higher level item, when the item of the same type as the converted items exists within the preset distance, arrange the higher level item in a nearest vacant item disposition area among nearest item disposition areas where the items of the same type are arranged, and terminate the item carrying mode.

In an embodiment, the processor 120 may determine whether an item of the same type as the converted items exists within a preset distance from a location where the items are automatically converted into the higher level item, and when the item of the same type as the converted items does not exist within the preset distance, control the game character in the item carrying mode until a vacant item disposition area appears on the game map.

In an embodiment, the processor 120 may decrease an allowed count for a game character to perform functions by a predetermined value, determine the allowed count for the game character to perform functions, and when the allowed count for the game character to perform functions is a predetermined value, control the game character in a rest mode, wherein the rest mode may correspond to a mode in which the allowed count for the game character to perform functions increases by a predetermined value.

Hereinafter, a method of providing a game UI, according to an embodiment, is described.

FIGS. 2 to 5 illustrate various examples of an item organizing function in a UI provided in a game service according to an embodiment. According to an embodiment, the UI may be provided by a computing device (e.g., the computing device 100 of FIG. 1).

Referring to FIG. 2, a method of providing an organizing function (e.g., an item merging function or an item merging skill) in a UI 900 may include, when a time in which a user does not play a game through a user input is greater than or equal to a preset time, among multiple types of items 220 to 227 and 230 to 234, determining whether a preset number of items (or more) 220 to 224 of the same type exist on a game map, when the preset number of items (or more) 220 to 224 of the same type exist, automatically converting the items 220 to 224 of the same type into a higher level item 240 by applying the item merging function to the items 220 to 224 of the same type, and when a vacant item disposition area exists in the game map, arranging the higher level item 240 in the vacant item disposition area. However, the components described above may not be essential to implement the method of providing a game UI, and thus, the method of providing a game UI may include more or less components than the components listed above. In an embodiment, a game map 200 may include a grid area including a plurality of item disposition areas, and the item disposition areas may correspond to item disposition areas 215 and 216, respectively.

More particularly, FIG. 2 illustrates an example of moving a character 210, to execute an organizing skill, to the area 215 where an item 220, which is one of the same type of items 220 to 227 and 230 to 234, is disposed in the game map 200.

In an embodiment, in response to a user input for directly merging items by the user, the user input may overlap an item that artificial intelligence (AI) of the character 210 tries to merge. To prevent a collision between the AI of the character 210 and the user's control, the use of the item merging function may be limited.

In an embodiment, the same type of items 220 to 224, to which the item merging function is applied, may be determined based on a predefined priority, which is based on the type of items. For example, the same type of items to which the item merging function is applied may be determined based on the predefined priority, in an order of a main item including a healing flower and a healing essence, an item from ruins including a spore of Eden, a paper crane, a sprout, a seedling plate, and a branch, an item used as currency including an item that generates a healing flower, a coin, lumber, and a fruit, a tutorial item, such as a fruit tree and an item from a box, a general item, and a box containing an item. For example, the character 210 may determine that the same type of items 220 to 224 have priorities to which the item merging function is applied compared to the same type of items 230 to 234, based on the predefined priority. In an embodiment, the item merging function may be used for all items designated as data, but may not be used for an item which is not allowed to use the item merging function. For example, the item which is not allowed to use the item merging function may include the final level item of an item chain, ruins, a building, a box-type box, and other merging-unavailable items. For example, to prevent taking away a user's fun of registering a new item in an item book due to the item merging function, when an (n+1) level item is not registered in the item book by viewing the item book, the item merging function may be unavailable.

In an embodiment, the same type of items 220 to 224, to which the item merging function is applied, may be determined based on at least one of a level of the character 210 and the allowed count for the character 210 to perform functions. For example, when the character 210 is a character that performs an item gathering function and an item constructing function, the character 210 may not use the item merging function. For example, when the level of the character 210 is high, the character 210 may perform the item merging function more times for more various items as the allowed count to perform functions increases. For example, when the number of characters 210 increases, an opportunity to use the item merging function may increase. A valid time in which the character 210 may stay in the item disposition area may increase, and various items may be simultaneously merged. Through this, the user may organize stacked items as many and fast as possible.

For example, the character 210 may search whether 5 or more of items of the same type (hereinafter, n-level items) exist in the game map 200 and when a search result is obtained, the character 210 may move to the nearest item of the found items. In an embodiment, the item merging function may be available only when a user does not play the game for more than a preset time, there is no user control on the UI 900 for more than the preset time, and other merging or gathering functions are not currently performed on the game map 200. The preset time may be, for example, 3 seconds, but is not limited thereto. This is because, when the item merging function is activated while an item state on an item disposition area changes, an undesirable chain merging may occur.

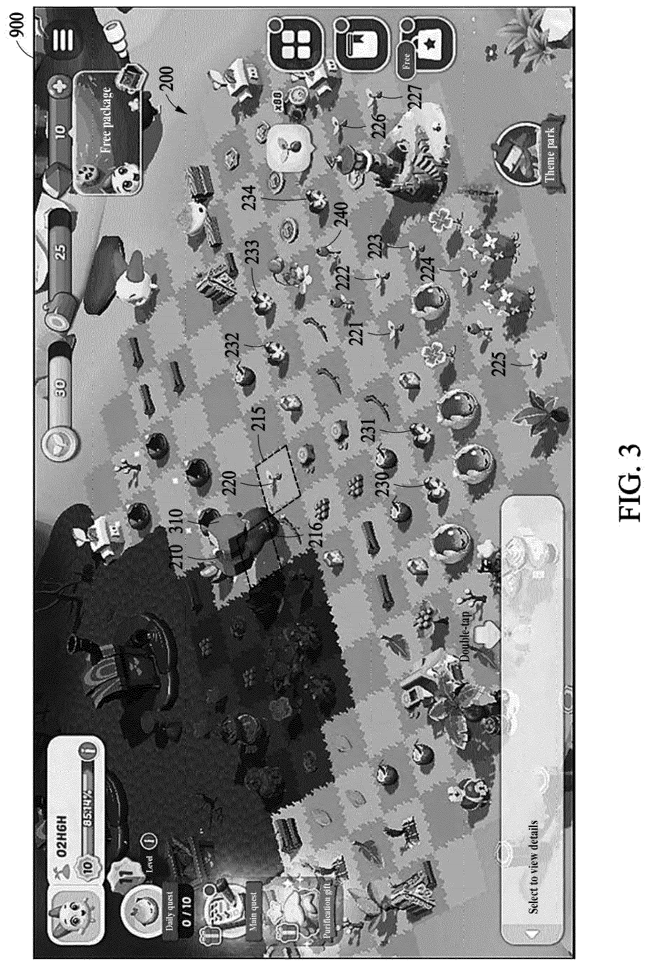

FIG. 3 illustrates an example that the character 210 uses the item merging function according to an embodiment. For example, the character 210 may move to the item disposition area 215 where an item 220 is placed. In an embodiment, the character 210 may gather items in item disposition areas by using a weapon 310, and then may convert the items into an item 240 that has the same type and higher level. The weapon 310, which is normally hidden, may be pulled out when the merging function is activated and may be displayed on the screen. In the same way as a weapon for a current attack action, the weapon 310 may be displayed from the time when the character 210 moves to work and activates the merging function.

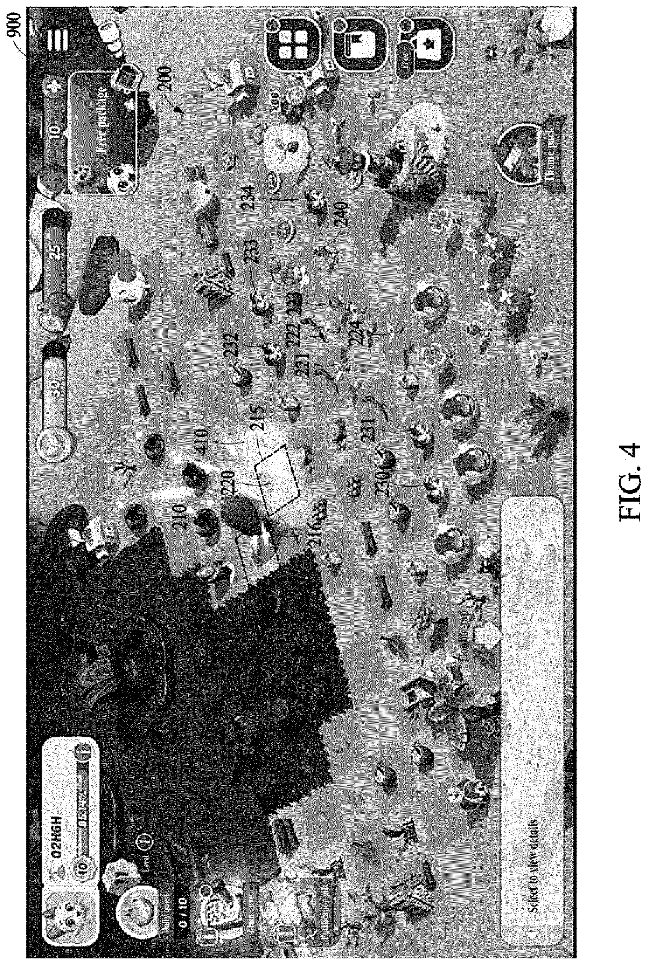

FIG. 4 illustrates an example that after the character 210 uses the item merging function, the same type of items 220 to 224, to which the item merging function is applied, move. In an embodiment, when the merging function is applied, an action effect 410 may occur on the item disposition area 215 to where the character 210 moves and an effect, for example, five of the same type of items 220 to 224 are dragged and gathered to a location where the action effect 410 has occurred, may occur.

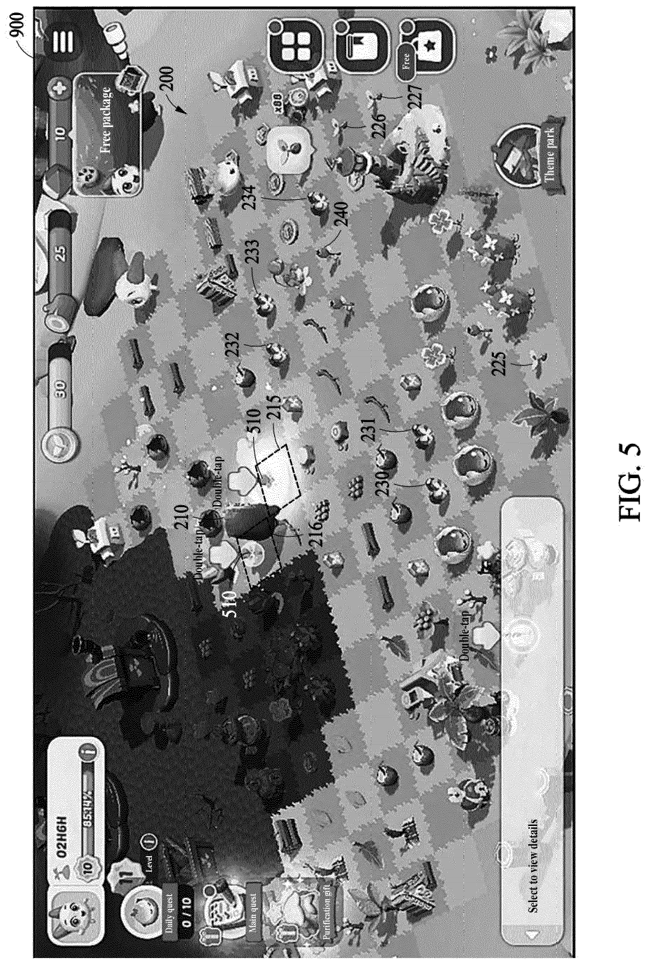

FIG. 5 illustrates an example that after the character 210 uses the merging function, the same type of items 220 to 224, to which the item merging function is applied, are converted into the item 240 of the same type and higher level. In an embodiment, when the action effect 410 is finished, the weapon 310 may disappear again and based on the item disposition area 215 where the item 220 is disposed, the same type of items 220 to 224 may be converted into items 510 and 511 having the same type and higher level. Thereafter, two of the items 510 and 511 of the same type and higher level may be generated. In an embodiment, when the action effect 410 is finished, the items 510 and 511 of the same type and higher level may be disposed in the nearest item disposition areas 215 and 216, respectively. In an embodiment, when the item merging function is activated, a chain of item merging may not occur with other adjacent items and a bonus according to item merging may not occur.

In an embodiment, the method of providing an organizing function in the UI 900 may further include decreasing an allowed count for a game character to perform functions by a predetermined value, determining the allowed count for the game character to perform functions, and when the allowed count for the game character to perform functions is a predetermined value, controlling the game character in a rest mode. In the rest mode, the allowed count for the character 210 to perform functions may increase by the predetermined value. In an embodiment, controlling the character in the rest mode may include, for example, when the allowed count for the character to perform functions is 0, determining whether a vacant house exists in the game map and when the vacant house exists, moving the exhausted character to the house and resting the character until the allowed count for the character to perform functions is reset. For example, an allowed count, to be consumed, to perform functions may be predetermined in a table. When the allowed count to perform functions reaches 0, the character 210 may reset the allowed count to perform functions by waiting for a predetermined time and may reappear on the game map 200.

When there is no vacant item disposition area on the game map 200, the character 210 may be operated in the item carrying mode. The item carrying mode may be a mode in which the character 210 moves on the game map 200 while carrying the higher level items 510 and 511. Here, when a vacant item disposition area is found while the character 210 carries both of the higher level items 510 and 511, the character 210 may move to the nearest vacant item disposition area and may dispose one item on the vacant item disposition area. When the character 210 disposes both of the higher level items 510 and 511 carried by the character 210, the item carrying mode of the character 210 may be terminated.

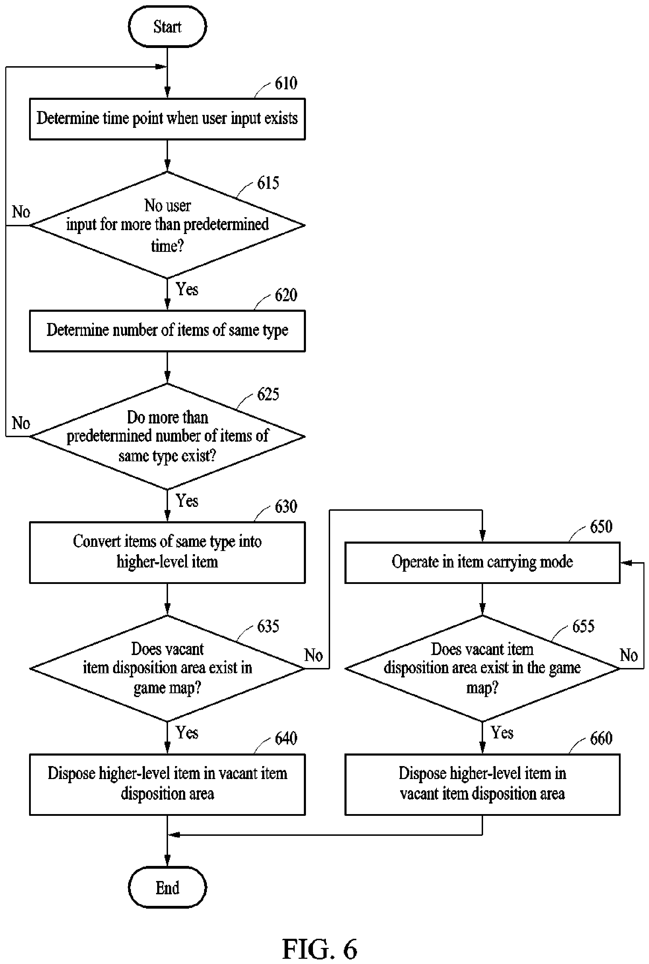

FIG. 6 is a flowchart illustrating a method of providing an organizing function in a UI, according to an embodiment. The method of providing an organizing function according to an embodiment may be performed by a computing device (e.g., the computing device 100 of FIG. 1) described herein.

Referring to FIG. 6, in operation 610, a device for providing an organizing function in a game UI (hereinafter, referred to as the device) may determine a time point at which a user input exists. The device may determine an elapsed time from the time point of the latest user input to the current time point through the UI.

In operation 615, the device may determine whether a user input does not exist for more than a preset time and when the user input does not exist for more than the preset time, in operation 620, the device may determine the number of items of the same type on the game map. When the user input exists within the preset time, the device may return to operation 610 and may repeat determining the time point at which the user input exists.

In operation 625, the device may determine whether a preset number of items (or more) of the same type exist. When the preset number of items (or more) of the same type exist, in operation 630, the device may convert the same type of items into a higher level item. When the preset number of items (or more) of the same type do not exist, the device may return to operation 610 and may repeat determining the time point at which the user input exist.

In operation 635, the device may determine whether a vacant item disposition area exists on the game map and when the vacant item disposition area exists on the game map, in operation 640, the device may dispose the higher level item in the vacant item disposition area.

When a vacant item disposition area does not exist in the game map, in operation 650, the device may control the character in the item carrying mode. Thereafter, in operation 655, the device may determine whether a vacant item disposition area exists on the game map. When the vacant item disposition area exists in the game map, in operation 660, the device may dispose the higher level item in the vacant item disposition area. In operation 650, the device may control the character to carry, for example, both of higher level items. In operation 655, when the vacant item disposition area exists on the game map, the device may control the character to move to a nearby vacant item disposition area. In operation 655, when the vacant item disposition area does not exist on the game map, the device may return to operation 650 and may control the character to dispose, for example, both of the higher level items on the vacant item disposition areas.

In operation 650 according to an embodiment, controlling of the game character in the item carrying mode may include determining whether an item of the same type as the converted items exists within a preset distance from a location where the items are automatically converted into the higher level item, when the item of the same type as the converted items exists within the preset distance, arranging the higher level item in a nearest vacant item disposition area among nearest item disposition areas where the items of the same type are arranged, and terminating the item carrying mode. In operation 650, the controlling of the game character in the item carrying mode may include determining whether an item of the same type as the converted items exists within a preset distance from a location where the items are automatically converted into the higher level item, and when the item of the same type as the converted items does not exist within the preset distance, controlling the game character in the item carrying mode until a vacant item disposition area appears on the game map.

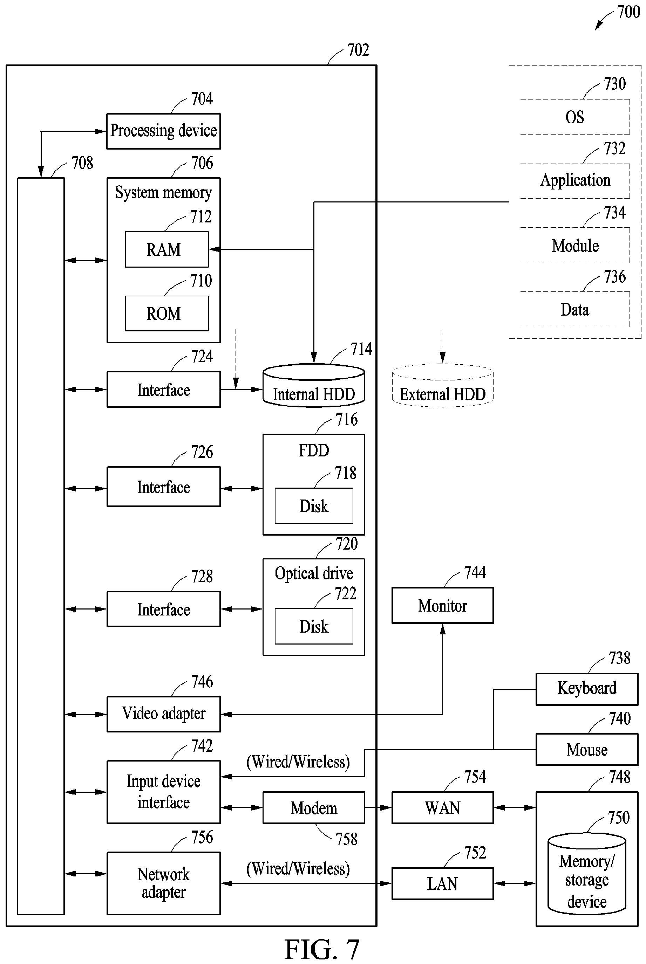

FIG. 7 is a block diagram illustrating an example of a computing environment in which embodiments are implemented.

FIG. 7 illustrate an example of an environment 700 that implements various aspects of the present disclosure including a computer 702, and the computer 702 may include a processing device 704, a system memory 706, and a system bus 708. The system bus 708 may connect system components including (but not limited) the system memory 706 to the processing device 704. The processing device 704 may be a processor among various commercial processors. A dual processor and other multiprocessor architectures may also be used as the processing device 704. In an embodiment, the computer 702 may correspond to a computing device (e.g., the computing device 100 of FIG. 1) described herein.

The system bus 708 may be any one of several types of bus structures that may additionally interconnect to a local bus using any one of a memory bus, a peripheral bus, and various commercial bus architectures. The system memory 706 may include ROM 710 and RAM 712. A basic input/output system (BIOS) may be stored in ROM 710, such as ROM, EPROM, and EEPROM, and the BIOS may include a basic routine configured to help transmit information between components of the computer 702 during, for example, booting.

The RAM 712 may further include high-speed RAM, such as static RAM, for caching data.

The computer 702 may also include an internal hard disk drive (HDD) 714 (e.g., enhanced integrated drive electronics (EIDE) and serial advanced technology attachment (SATA)) that may also be configured for an external purpose in an appropriate chassis (not illustrated), a magnetic floppy disk drive (FDD) 716 (e.g., configured to read from or record on a removable disk 718), and an optical disk drive 720 (e.g., configured to read or record on a CD-ROM disk 722 or other high-capacity optical media, such as a digital video disc (DVD)). The HDD 714, the magnetic disk drive 716, and the optical disk drive 720 may be connected to the system bus 708 via an HDD interface 724, a magnetic disk drive interface 726, and an optical drive interface 728, respectively. An interface for implementing an external drive may include at least one a universal serial bus (USB) and an IEEE 1394 interface technique.

The drive and related computer-readable media may provide non-volatile storage, such as data, a data structure, computer-executable instructions, and the like. In case of the computer 702, the drive and the media may correspond to storing data in an appropriate digital type. Although the descriptions of the computer-readable media provided above are of an HDD, a removable magnetic disk, and removable optical media, such as a CD or a DVD, one of ordinary skill in the art may clearly understand that other types of computer-readable media, such as a zip drive, a magnetic cassette, a flash memory card, a cartridge, and the like, may also be used in the operating environment and the aforementioned media may include computer-executable instructions for performing the methods of the present disclosure.

A drive and the RAM 712 may store various program modules including an operating system (OS) 730, one or more application programs 732, a program module 734, and program data 736. All or some of the OS 730, the application 732 application, the program module 734 module, and/or data may be cached in the RAM 712. It should be understood that the present disclosure may be implemented in a commercially available OS or a combination of OSs.

A user may input a command and information to the computer 702 through one or more wired/wireless input devices, for example, a keyboard 738 and a pointing device, such as a mouse 740. Other input devices (not illustrated) may be a microphone, an infrared (IR) remote controller, a joystick, a game pad, a stylus pen, a touch screen, and the like. Although the input device may often connect to the processing device 704 through an input device interface 742 connected to the system bus 708, the input device may be connected thereto through a parallel port, an IEEE 1394 serial port, a game port, a USB port, an IR interface, and other interfaces.

A monitor 744 or other display devices may also be connected to the system bus 708 through an interface, such as a video adapter 746. In addition to the monitor 744, the computer 702 may include a speaker, a printer, and other peripheral output devices (not illustrated).

The computer 702 may operate in a networked environment using logical connection to one or more remote computer of one or more remote computers 748 via wired and/or wireless communication. The remote computer(s) 748 may be a workstation, a computing device, a router, a PC, a mobile computer, a microprocessor-based entertainment device, a peer device, and other typical network nodes and typically may include most or all of the components described with reference to the computer 702. However, for brevity, only a memory storage device 750 is illustrated. The illustrated logical connection may include wired/wireless connection to a local area network (LAN) 752 and/or a wider network, for example, a WAN 754. The LAN and WAN networking environment may be common in an office and company, may facilitate an enterprise-wide computer network, such as intranets, may be connected to a worldwide computer network, for example, the Internet.

In the LAN networking environment, the computer 702 may be connected to the LAN 752 via a wired and/or wireless communication network interface or a network adapter 756. The network adapter 756 may facilitate wired or wireless communication with the LAN 752, and the LAN 752 may include a wireless access point installed for communicating with the network adapter 756. In the WAN networking environment, the computer 702 may include a modem 758, may be connected to a communication computing device on the WAN 754, or include other means configured to set communication via the WAN 754, such as via the Internet. The modem 758, which may be internal or external and wired or wireless, may be connected to the system bus 708. In the networked environment, program modules described with reference to the computer 702 or a portion thereof may be stored in the remote memory/storage device 750. It should be understood that the illustrated network communication is an example and other means configured to set a communication link between computers may be used.

The computer 702 may perform an operation of communicating with a wireless device or object that is deployed and operates in wireless communication, such as a printer, a scanner, a desktop, and/or a mobile computer, a portable digital assistant (PDA), a communication satellite, a device or location related to a wireless detectable tag, and a telephone. This may include wireless fidelity (Wi-Fi) and Bluetooth wireless technology. Accordingly, the communication may have a predefined structure that is the same as the conventional network or may be ad hoc communication between at least two devices.

The computer 702 described above may include various computer-readable media. Any medium accessible by a computer may be the computer-readable medium, and the computer-readable medium may include a volatile or non-volatile medium, a transitory or non-transitory medium, and a removable or non-removable medium.

For example, the computer-readable medium may include a computer-readable storage medium and a computer-readable transmission medium, but is not limited thereto. The computer-readable storage medium may include a volatile or non-volatile medium, a transitory or non-transitory medium, and a removable or non-removable medium implemented by any method or technique of storing computer-readable instructions, a data structure, a program module, and information, such as other data. Examples of computer-readable medium may include RAM, ROM, EEPROM, flash memory, other memory techniques, CD-ROM discs, DVDs, other optical disc storage devices, magnetic cassettes, magnetic tape, a magnetic disc storage device, other magnetic storage devices, or any other media that may be used for storing desired information accessible by a computer, but are not limited thereto.

Examples of a computer-readable transmission medium may implement computer-readable instructions, data structures, program modules, and other data in a modulated data signal, such as carrier waves or other transport mechanisms and may include all information transmission media. The term, "modulated data signal" may refer to a signal of which one or more features are set or changed to encode information in the signal. For example, the computer-readable transmission medium may include a wired network or a wired medium, such as direct wired connection and a wireless medium, such as audio, radio frequency (RF), IR, and other wireless media. Of the media described above, any combination thereof may be included in the range of the computer-readable transmission medium.

In the present disclosure, one of ordinary skill in the art may understand that various examples of logic blocks, modules, processors, means, circuits, and algorithm operations described herein may be implemented by electronic hardware (for convenience, referred to as software herein), various programs, and design code, or any combination thereof. To clearly describe this interchangeability of hardware and software, various examples of components, blocks, modules, circuits, and operations are generally described above related to their functions. Whether the functions are implemented in hardware or software may depend on a design constraint imposed on a predetermined application and the entire system. One of ordinary skill in the art of the present disclosure may implement the described function by various methods for each predetermined application, however, such implementation may not depart from the spirit and scope of the present disclosure.

Various embodiments provided herein may be implemented in a method, a device, and standard programming, and/or an article using an engineering technique. The term, "article" may include a medium, carrier, or a computer program accessible from any computer-readable storage device. For example, the computer-readable storage device may include a magnetic storage device (e.g., an HDD, a floppy disc, a magnetic strip, and the like), an optical disc (e.g., a CD, a DVD, and the like), a smart card, and a flash memory device (e.g., EEPROM, a card, a stick, a key drive, and the like), but is not limited thereto. In addition, various storage media provided herein may include one or more devices and/or other machine-readable media configured to store information.

It should be understood that a predetermined order or hierarchy of operations in the proposed processes is only an example. Based on a design priority, it should be understood that the predetermined order or hierarchy of operations of the processes in the scope of the present disclosure may be rearranged. The claims may provide elements of various operations in sampled order, however, it does not intend to limit the order or hierarchy. The description of embodiments provided herein may be provided for one of ordinary skill in the art to use or implement the present disclosure. While this disclosure includes specific examples, it will be apparent to one of ordinary skill in the art that various changes in form and details may be made in these examples without departing from the spirit and scope of the claims and their equivalents. Therefore, the scope of the disclosure is defined not by the detailed description, but by the claims and their equivalents, and all variations within the scope of the claims and their equivalents are to be construed as being included in the disclosure.

## Claims

1. A method of providing an item merging function in a game user interface (UI), the method comprising:
when a time in which a user does not play a game through a user input is greater than or equal to a preset time, among multiple types of items, determining whether a preset number or more of items of the same type exist on a game map;
when the preset number or more of items of the same type exist, automatically converting the items of the same type into a higher level item by applying the item merging function to the items of the same type; and
when a vacant item disposition area exists in the game map, arranging the higher level item in the vacant item disposition area.

2. The method of claim 1, wherein the items, of the same type, to which the item merging function is applied are determined based on a predefined priority based on a type of item.

3. The method of claim 1 or claim 2, wherein the items, of the same type, to which the item merging function is applied are determined based on at least one condition of a level and an allowed count for a character to perform functions.

4. The method of any preceding claim, further comprising:
when the vacant item disposition area does not exist on the game map, controlling a game character in an item carrying mode,
wherein the item carrying mode corresponds to a mode in which the game character moves on the game map while carrying the higher level item.

5. The method of claim 4, wherein the controlling of the game character in the item carrying mode comprises
determining whether an item of the same type as the converted items exists within a preset distance from a location where the items are automatically converted into the higher level item,
when the item of the same type as the converted items exists within the preset distance, arranging the higher level item in a nearest vacant item disposition area among nearest item disposition areas where the items of the same type are arranged, and
terminating the item carrying mode.

6. The method of claim 4 or claim 5, wherein the controlling of the game character in the item carrying mode comprises
determining whether an item of the same type as the converted items exists within a preset distance from a location where the items are automatically converted into the higher level item, and
when the item of the same type as the converted items does not exist within the preset distance, controlling the game character in the item carrying mode until a vacant item disposition area appears on the game map.

7. The method of any preceding claim, further comprising:
decreasing an allowed count for a game character to perform functions by a predetermined value;
determining the allowed count for the game character to perform functions; and
when the allowed count for the game character to perform functions is a predetermined value, controlling the game character in a rest mode,
wherein the rest mode corresponds to a mode in which the allowed count for the game character to perform functions increases by a predetermined value.

8. The method of any preceding claim, wherein the game map comprises a grid area comprising a plurality of item disposition areas.

9. A device for providing an item merging function to a game user interface (UI), the device comprising:
an output module configured to display a game map comprising a plurality of items and a character;
a memory configured to store one or more instructions; and
a processor configured to execute the one or more instructions,
wherein the processor is configured to:
when a time in which a user does not play a game through a user input is greater than or equal to a preset time, among multiple types of items, determine whether a preset number or more of items of the same type exist on a game map,
when the preset number or more of items of the same type exist, automatically convert the items of the same type into a higher level item by applying the item merging function to the items of the same type, and
when a vacant item disposition area exists in the game map, arrange the higher level item in the vacant item disposition area.

10. The device of claim 9, wherein the processor is further configured to:
when the vacant item disposition area does not exist on the game map, control a game character in an item carrying mode,
wherein the item carrying mode corresponds to a mode in which the game character moves on the game map while carrying the higher level item.

11. The device of claim 10, wherein the processor is further configured to:
determine whether an item of the same type as the converted items exists within a preset distance from a location where the items are automatically converted into the higher level item,
when the item of the same type as the converted items exists within the preset distance, arrange the higher level item in a nearest vacant item disposition area among nearest item disposition areas where the items of the same type are arranged, and
terminate the item carrying mode.

12. The device of claim 10 or claim 11, wherein the processor is further configured to:
determine whether an item of the same type as the converted items exists within a preset distance from a location where the items are automatically converted into the higher level item, and
when the item of the same type as the converted items does not exist within the preset distance, control the game character in the item carrying mode until a vacant item disposition area appears on the game map.

13. The device of any of claims 9 to 12, wherein the processor is further configured to:
decrease an allowed count for a game character to perform functions by a predetermined value,
determine the allowed count for the game character to perform functions, and
when the allowed count for the game character to perform functions is a predetermined value, control the game character in a rest mode,
wherein the rest mode corresponds to a mode in which the allowed count for the game character to perform functions increases by a predetermined value.
